# EUROPEAN PATENT SPECIFICATION

(11) **EP 1 165 436 B1**
(45) Date of publication and mention of the grant of the patent: **30.04.2008**
(21) Application number: 00914320.7
(22) Date of filing: 20.03.2000
(51) Int. Cl.: C01B 31/02

(54) **THE METHOD AND DEVICE FOR PRODUCING HIGHER FULLERENES AND NANOTUBES**
VERFAHREN UND VORRICHTUNG ZUR HERSTELLUNG VON HÖHEREN FULLERENEN UND NANORÖHREN
PROCEDE ET APPAREIL POUR PRODUIRE DES FULLERENES SUPERIEURS ET DES NANOTUBES

(30) Priority: 23.03.1999 WO PCT/IB99/00481
(43) Date of publication of application: 02.01.2002
(73) Proprietor: Rosseter Holdings Limited, 3313 Limassol (CY)
(72) Inventor: RYZHKOV, Vladislav Andreevitch, 3095 Limasol (CY)
(74) Representative: Ouzman, Beverley Nicola Claire
(86) International application number: PCT/IB2000/000406
(87) International publication number: WO 2000/061492

(56) References cited:
- DE-A- 4 224 556
- DE-A- 4 418 100
- D.K.MODAK ET AL: "a simple technique for producing fullerenes from electrically discharged benzene and toluene" INDIAN J. PHYS., vol. 67a, no. 4, 1993, pages 307-310, XP000856189 cited in the application

## Description

This invention is related to the field of chemical technologies, and particularly to the field of producing fullerenes and carbon nanotubes.

Fullerenes and nanotubes are the most desirable materials for basic research in both chemistry and physics, as well as applied research in electronics, non-linear optics, chemical technologies, medicine, and others.

The process of producing new allotrope forms of carbon, fullerenes and nanotubes, is based on different methods of generating a cool plasma of carbon clusters (such as laser ablation of carbon-containing substances, pyrolysis of hydrocarbons, or electric arc discharge, etc), and the clusters' crystallization to fullerenes and nanotubes under certain conditions. The fullerenes are then eluted from the soot by the use of any organic solvent (benzene, toluene, xylenes, carbon disulphide, etc) (R. E. Smalley "From Balls to Tubes to Ropes: New Materials from Carbon" Proc. of American Institute of Chemical Engineers. South Texas Section, January Meeting in Houston, January 4, 1996). Nanotubes on the other hand are separated from the soot by the use of any oxidation process (P. M. Ajayan, et al., Nature 1993, V.362, p.522).

The processes of forming fullerenes and nanotubes are competitive and therefore it is possible to displace the balance in their output by changing conditions either of the generation process or crystallization. Increasing the pressure of a buffer gas (He or Ar) from 50 - 150 Torr, which is optimal for producing fullerenes, to 500 Torr leads to a preferential formation of nanotubes (T. Guo, et al., Chem. Phys. Lett., 1995, V.243, p.49). In addition, adding some metal catalysts (Co, Ni, Pt, Fe, etc) to an initial graphite leads to preferential formation of Single-Walled NanoTubes (SWNT) (Andreas Thess, et al., Science, 273. 483-487 (July 26, 1996)) with a yield of up to 70% in the case of laser ablation of the graphite.

Several methods are used for producing SWNTs (Andreas Thess, et al., Science, 273. 483-487 (July 26, 1996)), each of which differs in the generation of the cool carbon clusters' plasma. Comparatively low outputs of SWNTs lead to very high prices of the SWNTs ($1,000-10,000 per gram).

The process of producing higher fullerenes (i.e. fullerenes higher than C70) is developed to a lesser extent than the process for the classical production of C60 and C70.

The main problem is a very low yield of the higher fullerenes which for C74, C76, C78, and C84 is usually about 1-3% and less than 0.1% for C90, C94, C98 in comparison to the 10-40% for the classical fullerenes (K. S. Khemani, et al., J. Org. Chem., 1992, V.57, p.3254). As a result, the amount of C90 and higher fullerenes available is not enough to study their general properties.

Thus, a method and device are required for producing higher fullerenes and carbon nanotubes with an attainable technical result (greater amounts of higher fullerenes and nanotubes at a relatively low cost), that is expressed as preferably producing the higher fullerenes and in a simple separation of the nanotubes from the soot particles.

The existing method and device for producing fullerenes (W. Kraechmer et al., Nature, 1990. V.347, p.354) suggests that graphite electrodes should be placed in a contained volume filled by He gas at a pressure of 50-150 Torr. Under certain conditions (electric arc current of up to 200 Å and voltage in the range 5 - 20 V) evaporated graphite clusters can form fullerene molecules, mainly C60 (80-90%) and C70 (approximately 10-15%) as well as small amounts of higher fullerenes (total sum not exceeding 3 - 4%). High Performance Liquid Chromatography (HPLC) is required to separate individual fullerenes (F. Diederich, et al., Science, 1991, V.252, p.548).

HPLC is characterised by very low production of higher fullerenes and, as a result, market prices of the higher fullerenes are enormous, more than $1,000-10,000 per gram (Alderich catalogue, 1999). Therefore this method and device is useless for producing higher fullerenes. Outputs of C76, 78, 84 from such technology is about a couple of milligrams a day per processor, and is even less for higher fullerenes.

The use of both relatively low arc currents and special metallic catalysts are needed for producing single-walled carbon nanotubes with certain diameters. The maximal nanotube output achieved is 60% of the graphite material scraped from a cathode surface. The total nanotube output is usually greatly decreased during separation of the nanotubes from the rest of the soot particles when an oxidation process with gases (oxygen, carbon dioxide) is used. Moreover, the separation process is rather long and complicated.

It is therefore necessary to find an approach which allows production of higher fullerenes and nanotubes with higher yields.

For the C74 fullerene such a way has been realised (D. K. Modak et al., Indian J. Phys., 1993, V.A67, p.307) by the use of a constant current arc-discharge in a liquid benzene and/or toluene medium, which dissolves fullerenes well. The dominant fullerene molecules were C50, whereas the concentration of C60 and C74 was comparable but 3-8 times less than that of C50. All fullerenes produced were dissolved in the medium and, after removal of non-dissolved soot particles (either by centrifugation or filtration), fullerenes could be separated by HPLC.

However, no fullerenes greater than C74 or SWNTs were produced this way. The greatest problem in all of the methods is the use of an electric arc discharge that provides a gap of constant value between the graphite rods. In observing Modak's method (D. K. Modak et al., Indian J. Phys., 1993, V.A67, p.307) a safety problem arose because of the release of huge amounts of gases (mainly, hydrogen and acetylene) in the process of cracking benzene/toluene.

The best solution regarding these problems is using an auto-regulated process of an electric arc, which periodically switches an electric circuit on and off.

The device and method for producing fullerenes as disclosed in the Russian Patent application file by Tomsk High Voltage Institute is the closest to our invention by a main point and attainable result (A.P. 11'in, Yu-A. Kracnyatov, G.A. Volostnov, V.T.Galeev. ICI C0I B31/00 entitled "The device and method for producing fullerenes", priority date from September, 1997). This document discloses a periodical pulsed auto-regulated action of the Electric-Current Arc-Discharged (ECAD) in natural liquid hydrocarbon mediums like diesel fuels, oils, etc.

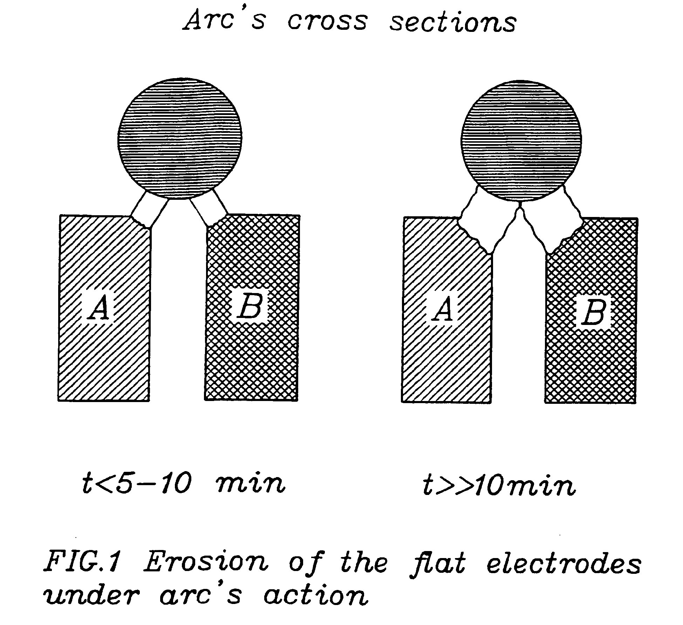

The pulsed auto-regulated regime of the ECAD is performed by a contact breaking of the electric circuit. This is due firstly to the lifting of a spherical graphite contactor by the gaseous products released during the action and secondly by switching on the circuit due to the contactor going down under the action of gravity to two opposite-polarity graphite electrodes made as plates (see Fig. 1).

The fullerene mixture is produced during the pulsed auto-regulated action of the Electric-Current Arc Discharged (ECAD) in a multi-component hydrocarbon medium liquid. The pulsed character of the action (the ECAD current intensity varies from zero to jₘₐₓ and then to zero) allows the achievement of an optimal current intensity (jₒₚₜ) by choosing a maximum current intensity (jₘₐₓ) which is essentially more than the expected value of the optimal intensity (jₒₚₜ). It is important to note that such an action avoids the over saturation of the arc gap by gaseous products.

The device and method mentioned above are able to produce a relatively high yield of higher fullerenes, i.e. the amounts of C84 and C60 may be comparable.

However, fullerene outputs are low (about 10 mg per cycle per processor) because of the rapid undesirable erosion of a surface of the electrodes during the arc action (see Fig. 1). As a result of this erosion, the cross section of the electric arc discharge is increased with time, reducing the intensity of the arc's current, and the temperature of the carbon clusters' plasma. After 5 - 10 minutes of the process, judging by the sizes of the electrodes and contactor, this reduction leads to the termination of the fullerene formation process. A minimum current intensity (about 100 Å/cm²) is required to form C60/C70 and higher fullerenes in such a process.

In conclusion, light fullerenes (C28 to C50) and soot particles are mainly produced by this method, in turn reducing the yield of the higher fullerenes and C60. A prevalence of light fullerenes in comparison to C60 and higher fullerenes complicates valid detection and separation of the higher fullerenes.

An absence of a buffer gas and the presence of oxygen (from air) are added factors that reduce fullerene/nanotubes yields.

Finally, an important factor in reducing fullerene/nanotube yield is the prevalence of alkanes/alkenes and cycloalkanes (CₙH₂ₙ₊₂/CₙH₂ and CₙH₂ₙ) in the natural liquid medium (i.e. petrol consisting of 1.5-6% of pentane, isopentanes 0.5-2%, hexane 3-9%, isohexane 1-4%, heptane 3-11%, isoheptane 3-6%, octane 5-9%, isooctanes 5-9%, nonane 3-6%, isononanes 4-9%, cyclopentane 0.1-0.5%, methylcyclopentane 2.5-5%, cyclohexane 2.5-7%, napthenes (C₇H₁₄) 10-2%, napthenes (C₈H₁₆) 7-15%, napthenes (C₉H₁₈) 5-14%, benzene 0.2-2%, toluene 1-5%, xylenes 2-7%). During cracking the alkanes/alkenes produce twice as much hydrogen in comparison to aromatic hydrocarbons (nearly, CₙHₙ₋ₓ) and it is known that superfluous amounts of hydrogen restrict formation of fullerenes/nanotubes.

In order to achieve a technical result, in other words greater amounts of the higher fullerenes and carbon nanotubes at a relatively low cost, it is necessary to increase the relative yield of the higher fullerenes/nanotubes and omit HPLC as a method of fullerene separation. Thus, the problem of the conception of the method and device for producing higher fullerenes/nanotubes with an attainable technical result, greater amounts of the higher fullerenes/nanotubes with a relatively low cost, is maintained.

A solution of the method and device problems for producing higher fullerenes and nanotubes is achieved by two variants.

The first variant is only used if it is possible to compose the liquid of aromatic hydrocarbons which dissolve a required fullerene better than other fullerenes including C60. It is known that aromatic liquids (benzene, toluene, xylenes, etc) dissolve C60 and higher fullerenes differently, i.e. at room temperature (20°C) toluene dissolves C60 (approximately 2.8 g/l) twice as well as C70 (approximately 1.4 g/l) but o-xylene does it differently, the solubility of C60 is 5.2 g/l whereas of C70 is 14.3 g/l (R. S. Ruoff, et al., J. Phys. Chem. 1993, V.97, p.3379; M. T. Beck, G. Mandi, Fullerene Sci.. Technol. 1996, V.3, p.32; N. Sivaraman et al., J. Org. Chem. 1992, V.57, p.6007; X. Zhou et al., Fullerene Sci. Technol. 1997, V.51(1), p.285). As a rule solubility of C60 reduces when an increase of temperature occurs, whereas solubility of higher fullerenes increases with temperature.

Moreover, the fullerene/nanotube mixture is produced in the presence of argon gas in the multi-component aromatic hydrocarbon liquid which dissolves the required higher fullerenes better that other fullerenes including C60. Furthermore, the action is continued until the liquid dissolves the higher fullerenes. In that case, the required higher fullerene completely forces other fullerenes (including C60) out from the solution (liquid) to a soot/nanotube precipitation due to better solubility. In this case it is sufficient to separate the treated liquid (mostly containing the higher fullerenes) from the soot/nanotube precipitation (with the rest of the fullerenes including C60 adsorbed) by filtering through Whatman filters.

The liquid is then filtered through a certain layer of molecular sieves with pore diameters of 8 - 10 Angstroms, which selectively adsorb light fullerenes (less than C60 namely, C28 - C50). Taking into consideration the lack of information regarding the solubility of light fullerenes, the molecular sieves completely adsorb any molecules with sizes less than 7 Angstroms. The latter do not adsorb molecules with sizes equal or greater than 7 Angstroms i.e. C60 and higher fullerenes are not adsorbed by the molecular sieves. The "cleaned" liquid is then evaporated in vacuum to form a crystalline powder of the higher fullerene.

By using the Whatman filters, the sediment is dried in a vacuum oven and cleaned by washing. For washing, certain organic solvents which have a minimal solubility for fullerenes are used, the best of which are methanol (solubility of C60 is about 0.035 mg/l), acetone (1 mg/l) and pentane (5 mg/l).

Subsequently the remaining fullerenes are eluted from the cleaned sediment by benzene, toluene, xylene, etc. The solution formed is evaporated in vacuum to form C60 and higher fullerenes with a small admixture of the required higher fullerene crystalline powder.

The nanotubes in turn are separated from the remaining soot by a specific oxidation process. We suggest treating the carbon (soot/nanotubes) remainder. This is done by adding and boiling concentrated nitric acid during 1-2 hours in order to open the nanotubes' caps and thus separate the nanotubes from the soot particles. Finally, a centrifuge with a low rotation velocity (500-1,000 min⁻¹) is used to separate the nanotubes from the rest of the soot particles.

Under such separation the rest of the soot particles, which are spherically shaped with sizes (1,000-2,000 Å) larger than those of the nanotube lumps (300-1,000 Å), are precipitated first forming a black sediment at the bottom of the vials whereas the nanotubes form a dark-orange gel with the acid. One can separate this gel into fractions by taking part of the gel layer-by-layer. Each of the gel fractions contains lumps of SWNTs of nearly the same size. Such a separation is checked simply and obviously. Therefore one can have an additional product, carbon nanotubes, as well as producing higher fullerenes by our method and device.

The second variant is selected if it is impossible to compose a liquid of aromatic hydrocarbons, which dissolves a required higher fullerene better than other fullerenes including C60.

In this case the fullerene mixture is produced in a multi-component aromatic hydrocarbon liquid which dissolves the required higher fullerenes less than other fullerenes including C60. The action is continued until the liquid dissolves the remaining fullerenes including C60 up to the point when their concentration becomes equal to the limit of their solubility in the liquid.

In these conditions, other fullerenes (including C60) force out most of the required higher fullerenes to a soot/nanotube precipation. Therefore, the higher fullerenes might be separated from the rest of the fullerenes by using Whatman filters.

After drying and cleaning the separated soot sediment (as in the above-mentioned method), the required higher fullerenes are eluted from the sediment by a certain solvent (benzene, toluene, xylene, chlorobenzene etc.) with the help of a Soxhlet extractor.

Thus, these two variants of the method allow us to produce any higher fullerene and separate it from the rest of the fullerenes by composing a liquid with higher or lower solubility of the higher fullerene than that of others.

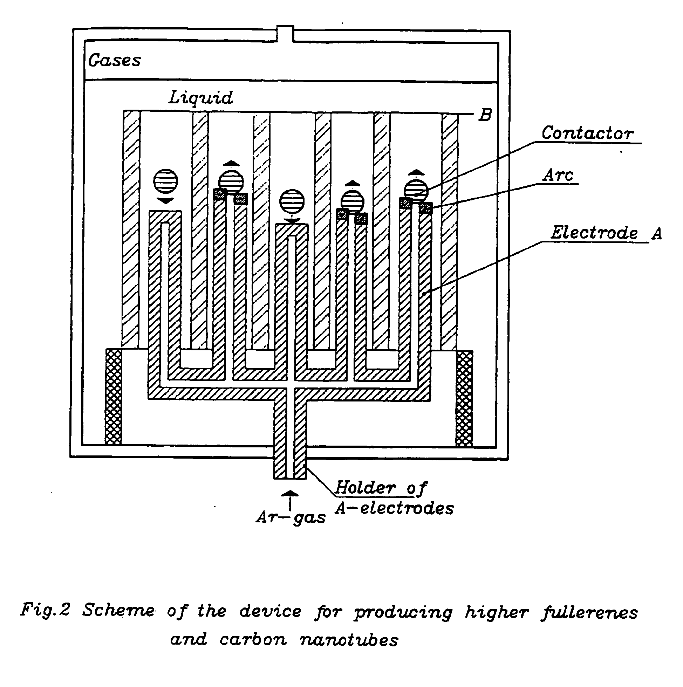

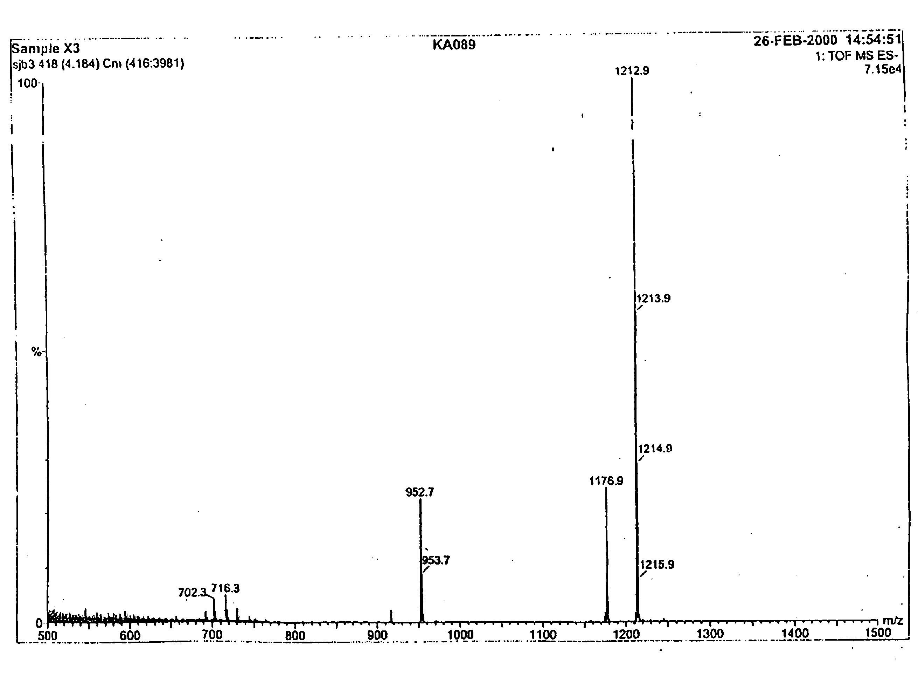

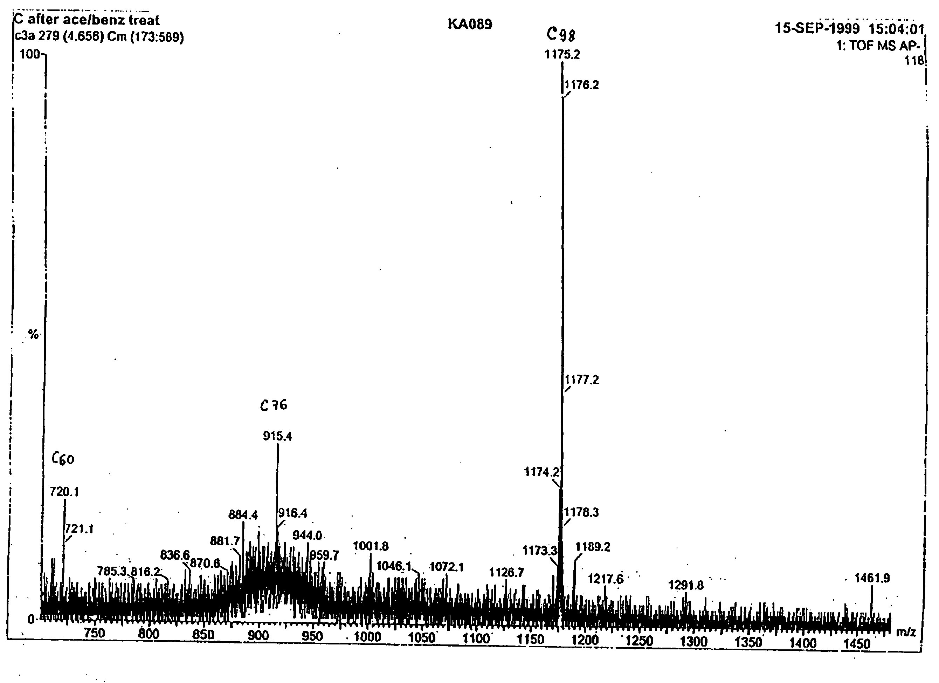

These variants are realised by the device as follows (see Fig. 2):

The device differs from the prototype by the geometry of the electrode system: cylindrical graphite pipes (electrode A) are installed axially in vertical cylindrical openings of a cylindrical graphite matrix (electrode B) and spherical graphite contactors are placed above the pipes. One notices that such a geometry maintains the constancy of the arc discharge cross section (therefore, constancy of the arc temperature) as it is defined by the cross section of the pipes, which are kept constant from top to bottom.

With this pipe geometry of electrode A, it becomes possible to pump argon gas through the pipes to the arc discharge space. This is performed before and during the action of the arc discharge, thus allowing the removal of oxygen from the liquid, and avoiding fullerene oxidation, and thus creating optimal conditions for carbon clusters annealing to fullerenes/nanotubes.

The body is filled by the hydrocarbon liquid to a level above the contactors to provide a maximum average duration of individual acts of the arc discharge. It allows increasing yields of the higher fullerenes because the interval, when the arc temperature is maximum, becomes greater.

An example of the invention:

Both variants have been tried.

The device was made with the following: Graphite pipes (electrode A) with a length of 50mm and external/internal diameters of 4 and 2 mm, correspondingly, Spherical graphite contactors with a diameter of 12.5mm and vertical cylindrical openings of a graphite matrix (electrode B) with a diameter of 13.5 mm. A cylindrical stainless steel body was filled with a liquid (based on a benzene solution of some aromatics like naphthalene, toluene and xylenes) to a level of 50 cm above the contactors. Such a level provided the maximum duration of the arc action as it was found in our experiments. Pure argon gas was pumped through the graphite pipes (electrode A) before the action (to remove air from the body and liquid) and during the action, thus creating optimal conditions for carbon clusters to anneal to fullerenes/nanotubes. The arc's cross section was about 3-4mm² and the intensity of arc's current was in the range of 100-400 Å/cm². The duration of the action (4-6 hours) depends on the type of higher fullerene required and, therefore, on the variant of the method and nature of the liquid, which are used for producing fullerenes/nanotubes.

By using the first variant we produced a mixture of higher fullerenes (see HPL-Chromatograms and Mass Spectrum at Fig. 3), mainly containing C98 (approximately 80%) with nearly 3% of C76 and approximately 15% of C78 with a total output in the range of 2-20g per processor per cycle (of 5 hours duration).

The second variant was used to produce a fullerene mixture mainly containing C98 (approximately 70%) with nearly 20% of C76 and about 10% of C60 (see MS Spectra at Fig. 4), with a total output in the range of 1-10 g per processor per cycle (of 5 hours duration).

An additional output of nanotubes is estimated to be in the range of 100-300 grams per processor per cycle. These nanotubes appeared as short (300-1,000 Å) ropes of SWNTs with average diameters of individual nanotubes in the range of 10-15 Å as estimated by Kr adsorbtion-desorbtion processes using our original XRF-based technique (V. A. Ryzhkov - in Abstracts of Intern. Workshop on Fullerenes and Allotropes of Carbon, IWFAC '99, 3-8 October 1999, St Petersburg, Russia).

Consequently, the technical result of our invention was the production of large amounts of the higher fullerenes and nanotubes at a relatively low coat.

## Claims

1. A method for producing a mixture of higher fullerenes and nanotubes, said method including the step of annealing carbon clusters during a pulsed auto-regulated action of an electric current arc discharge between graphite electrodes, said electrodes being located in hydrocarbon liquid wherein the mixture is produced with the arc having a maximum current intensity of 100-400 A/cm² and a voltage of 20-50V in the presence of argon gas and an aromatic hydrocarbon liquid able to differentially dissolve higher fullerenes of C70 or higher compared to lower fullerenes up to and including C60, and continuing the pulsed auto-regulated electric current arc discharge until said higher fullerenes or said lower fullerenes are dissolved.

2. The method according to Claim 1 wherein the fullerene mixture is produced in the liquid which dissolves the required higher fullerenes less than fullerenes up to and including C60 and wherein the method is continued until the liquid dissolves the fullerenes up to and including C60.

3. The method according to either one of Claims 1 and 2 wherein the higher fullerenes are separated by filtering the treated liquid and extracting the required higher fullerenes from the sediment using a suitable solvent.

4. A device for producing higher fullerenes and carbon nanotubes comprising an hermetically sealable body in which opposite-polarity graphite electrodes are installed and connected to a power supply switchable on and off by spherical graphite contactors, wherein a first electrode is formed in the shape of cylindrical graphite pipes and a second electrode is formed in the shape of a graphite matrix, wherein the first electrode is installed axially in vertical cylindrical openings of the graphite matrix forming the second electrode, the spherical graphite contactors being placed on the pipes of the first electrode, said contactors being able to move around their own geometrical centre and retrogressively along vertical cylindrical openings of the graphite matrix forming the cathode.

5. A method of forming a mixture of higher fullerenes and carbon nanotubes according to Claim 1 and using the device of Claim 4, wherein argon gas is pumped through the pipes of the first electrode before and during the arc discharge process and the body is filled with an aromatic hydrocarbon liquid to a level above the contactors to provide a maximum average duration of individual acts of the arc discharge.

6. A method for producing higher fullerenes and nanotubes, including forming and annealing carbon clusters during a pulsed auto-regulated action of the electric current discharge between graphite electrodes located in a hydrocarbon liquid, extraction and separation of the fullerenes and nanotubes, **characterised in that** the fullerene/nanotube mixture is produced at arc's current intensity of 100-400 A/cm² and voltage 20-50V in the presence of argon gas in aromatic hydrocarbon liquid which dissolves the required higher fullerenes better than other fullerenes including C60 wherein, the action is continued until the liquid dissolves the higher fullerenes after that the treated liquid is filtered through Whatman filters, separating a nanotube/soot mixture having the rest of the fullerenes, including C60, adsorbed thereto, and then through a layer of molecular sieves with diameters 8Å and 10Å separating low fullerenes wherein after cleaning the nanotube/soot sediment by washing with methanol or acetone the rest of the fullerene mixture is eluted from the cleaned sediment by a dissolvent and evaporated in vacuum, forming a crystalline powder of the rest of the fullerene mixture wherein the nanotubes are separated from the rest of the carbon particles by treating with a boiling concentrated HNO₃ acid during 1-2 hours and afterwards by low speed centrifugation of the carbon/acid mixture until the black sediment of the soot particles is precipitated to the bottom.

## Patentansprüche

1. Ein Verfahren zum Produzieren einer Mischung aus höheren Fullerenen und Nanoröhren, wobei das Verfahren den Schritt des Glühens von Kohlenstoffclustern während eines gepulsten autoregulierten Vorgangs einer Bogenentladung des elektrischen Stroms zwischen Graphitelektroden umfasst, wobei die Elektroden in flüssigem Kohlenwasserstoff lokalisiert sind, wobei die Mischung mit einer maximalen Stromstärke des Bogens von 100-400 A/cm² und einer Spannung von 20-50 V in der Anwesenheit von Argongas und einem aromatischen flüssigen Kohlenwasserstoff, die zur differentiellen Auflösung höherer Fullerene von C70 oder höher im Vergleich zu niedrigeren Fullerenen bis zu und einschließlich C60 fähig sind, produziert wird, und Fortführen der gepulsten autoregulierten Bogenentladung des elektrischen Stroms, bis die höheren Fullerene oder niedrigeren Fullerene aufgelöst sind.

2. Verfahren gemäß Anspruch 1, wobei die Fullerenmischung in der Flüssigkeit produziert wird, die die erforderlichen höheren Fullerene weniger als Fullerene bis zu und einschließlich C60 auflöst und wobei das Verfahren fortgeführt wird, bis die Flüssigkeit die Fullerene bis zu und einschließlich C60 auflöst.

3. Verfahren gemäß einem der Ansprüche 1 und 2, wobei die höheren Fullerene durch das Filtern der behandelten Flüssigkeit und das Extrahieren der erforderlichen höheren Fullerene von dem Sediment unter Verwendung eines geeigneten Lösemittels getrennt werden.

4. Eine Vorrichtung zum Produzieren von höheren Fullerenen und Kohlenstoff-Nanoröhren, die einen hermetisch siegelbaren Körper beinhaltet, in dem Graphitelektroden entgegengesetzter Polarität installiert sind und mit einer Stromversorgung verbunden sind, die durch sphärische Graphitkontaktgeber ein und aus schaltbar sind, wobei eine erste Elektrode in der Form von zylindrischen Graphitrohren gebildet ist und eine zweite Elektrode in der Form einer Graphitmatrix gebildet ist, wobei die erste Elektrode axial in vertikalen zylindrischen Öffnungen der Graphitmatrix, die die zweite Elektrode bildet, installiert ist, wobei die sphärischen Graphitkontaktgeber auf den Rohren der ersten Elektrode platziert sind, wobei die Kontaktgeber dazu fähig sind, sich um ihr eigenes geometrisches Zentrum zu bewegen und sich regressiv entlang ihrer vertikalen zylindrischen Öffnungen der Graphitmatrix, die die Kathode bildet, zu bewegen.

5. Verfahren zum Bilden einer Mischung aus höheren Fullerenen und Kohlenstoff-Nanoröhren gemäß Anspruch 1 und zur Verwendung der Vorrichtung aus Anspruch 4, wobei Argongas durch die Rohre der ersten Elektrode vor und während des Prozesses der Bogenentladung gepumpt wird und der Körper mit einem aromatischen flüssigen Kohlenwasserstoff auf einen Pegel über den Kontaktgebern gefüllt wird, um eine maximale Durchschnittsdauer individueller Vorgänge der Bogenentladung bereitzustellen.

6. Ein Verfahren zum Produzieren von höheren Fullerenen und Nanoröhren, einschließlich dem Bilden und Glühen von Kohlenstoffclustern während eines gepulsten autoregulierten Vorgangs der Entladung des elektrischen Stroms zwischen Graphitelektroden, die in einem flüssigen Kohlenwasserstoff lokalisiert sind, Extraktion und Trennung der Fullerene und Nanoröhren, **dadurch gekennzeichnet, dass** die Fulleren-/Nanoröhrenmischung bei einer Stromstärke des Bogens von 100-400 A/cm² und einer Spannung von 20-50 V in der Anwesenheit von Argongas in aromatischem flüssigen Kohlenwasserstoff, das die erforderlichen höheren Fullerene besser auflöst als andere Fullerene einschließlich C60, produziert wird, wobei der Vorgang fortgeführt wird, bis die Flüssigkeit die höheren Fullerene auflöst, nachdem die behandelte Flüssigkeit durch Whatman-Filter gefiltert wurde, was eine Nanoröhre/Ruß-Mischung, die den Rest der Fullerene einschließlich C60 daran adsorbierte, trennt, und dann durch eine Schicht von Molekularsieben mit Durchmessern von 8Å und 10 Å, die niedrige Fullerene trennt, wobei nach dem Säubern des Nanoröhre/Ruß-Sediments durch das Waschen mit Methanol oder Aceton der Rest der Fullerenmischung von dem gesäuberten Sediment durch ein Lösungsmittel eluiert und in Vakuum evaporiert wird, wodurch ein kristallines Pulver des Rests der Fullerenmischung gebildet wird, wobei die Nanoröhren von dem Rest der Kohlenstoffpartikel durch die Behandlung mit einer kochenden konzentrierten HNO₃-Säure während 1-2 Stunden und danach Zentrifugation bei geringer Geschwindigkeit der Kohlenstoff/Säure-Mischung, bis das schwarze Sediment der Rußpartikel an den Boden abgeschieden wird, getrennt wird.

## Revendications

1. Une méthode pour produire un mélange de fullerènes supérieurs et de nanotubes, ladite méthode incluant l'étape de recuire des amas de carbone pendant une action autorégulée pulsée d'une décharge en arc de courant électrique entre des électrodes en graphite, lesdites électrodes étant situées dans des hydrocarbures liquides, dans laquelle le mélange est produit lorsque l'arc a une intensité de courant maximum entre 100 et 400 A/cm² et une tension entre 20 et 50 V en présence de gaz argon et d'hydrocarbures aromatiques liquides à même de dissoudre de façon différentielle des fullerènes supérieurs de C70 ou plus comparé à des fullerènes inférieurs ayant jusqu'à et incluant C60, et de poursuivre la décharge en arc de courant électrique autorégulée pulsée jusqu'à ce que lesdits fullerènes supérieurs ou lesdits fullerènes inférieurs soient dissous.

2. La méthode selon la revendication 1 dans laquelle le mélange de fullerènes est produit dans le liquide qui dissout les fullerènes supérieurs requis moins que les fullerènes ayant jusqu'à et incluant C60 et dans laquelle la méthode est poursuivie jusqu'à ce que le liquide dissolve les fullerènes ayant jusqu'à et incluant C60.

3. La méthode selon l'une ou l'autre des revendications 1 et 2 dans laquelle les fullerènes supérieurs sont séparés par filtration du liquide traité et par extraction des fullerènes supérieurs requis du sédiment à l'aide d'un solvant adéquat.

4. Un dispositif pour produire des fullerènes supérieurs et des nanotubes de carbone comprenant un corps pouvant être scellé de façon hermétique dans lequel des électrodes en graphite de polarité opposée sont installées et connectées à un bloc d'alimentation pouvant être mis en circuit ou hors circuit par des contacteurs sphériques en graphite, dans lequel une première électrode est formée en configuration de tubes cylindriques en graphite et une deuxième électrode est formée en configuration d'une matrice en graphite, dans lequel la première électrode est installée de façon axiale dans des ouvertures cylindriques verticales de la matrice en graphite formant la deuxième électrode, les contacteurs sphériques en graphite étant placés sur les tubes de la première électrode, lesdits contacteurs étant à même de se déplacer autour de leur propre centre géométrique et de façon régressive le long d'ouvertures cylindriques verticales de la matrice en graphite formant la cathode.

5. Une méthode de formation d'un mélange de fullerènes supérieurs et de nanotubes de carbone selon la revendication 1 et utilisant le dispositif de la revendication 4, dans laquelle du gaz argon est pompé dans les tubes de la première électrode avant et pendant le processus de décharge en arc et le corps est rempli avec des hydrocarbures aromatiques liquides jusqu'à un niveau au-dessus des contacteurs pour fournir une durée moyenne maximum d'actes individuels de la décharge en arc.

6. Une méthode pour produire des fullerènes supérieurs et des nanotubes, incluant la formation et le recuit d'amas de carbone pendant une action autorégulée pulsée de la décharge de courant électrique entre des électrodes en graphite situées dans des hydrocarbures liquides, l'extraction et la séparation des fullerènes et des nanotubes, **caractérisée en ce que** le mélange fullerènes / nanotubes est produit à une intensité de courant d'arc entre 100 et 400 A/cm², et une tension entre 20 et 50 V en présence de gaz argon dans des hydrocarbures aromatiques liquides qui dissolvent les fullerènes supérieurs requis mieux que d'autres fullerènes incluant C60, dans laquelle l'action est poursuivie jusqu'à ce que le liquide dissolve les fullerènes supérieurs après que le liquide traité est filtré à travers des filtres de Whatman, la séparation d'un mélange nanotubes / suie dans lequel le reste des fullerènes, incluant C60, est adsorbé, et ensuite à travers une couche de tamis moléculaires ayant des diamètres de 8 Å et 10 Å séparant les fullerènes inférieurs, dans laquelle, après nettoyage du sédiment nanotubes / suie par lavage avec du méthanol ou de l'acétone, le reste du mélange de fullerènes est élué du sédiment nettoyé par un dissolvant et évaporé sous vide, formant une poudre cristalline du reste du mélange de fullerènes, dans laquelle les nanotubes sont séparés du reste des particules de carbone par traitement avec un acide HNO₃ concentré en ébullition pendant 1 à 2 heures et par la suite par centrifugation à faible vitesse du mélange carbone / acide jusqu'à ce que le sédiment noir des particules de suie soit précipité au fond.
